# EUROPÄISCHE PATENTSCHRIFT

(11) **EP 2 876 975 B1**
(45) Veröffentlichungstag und Bekanntmachung des Hinweises auf die Patenterteilung: **12.08.2020**
(21) Anmeldenummer: 14192594.1
(22) Anmeldetag: 11.11.2014
(51) Int. Cl.: H05B 6/12

(54) **Gargerätevorrichtung**
Cooking device
Dispositif d'appareil de cuisson

(30) Priorität: 21.11.2013 ES 201331694
(43) Veröffentlichungstag der Anmeldung: 27.05.2015
(73) Patentinhaber: BSH Hausgeräte GmbH, 81739 München (DE)
(72) Erfinder: Acero Acero, Jesus, 50002 Zaragoza (ES); Aranda Vazquez, Sandra, 50018 Zaragoza (ES); Llorente Gil, Sergio, 50009 Zaragoza (ES)

(56) Entgegenhaltungen:
- EP-A1- 2 473 001
- EP-A2- 0 706 303
- WO-A1-2014/170166
- DE-A1- 3 808 756
- DE-A1-102013 218 714
- FR-A1- 2 657 486
- JP-A- H05 251 167

## Beschreibung

Die Erfindung geht aus von einer Gargerätevorrichtung nach dem Oberbegriff des Anspruchs 1.

Aus dem Stand der Technik ist bereits eine Gargerätevorrichtung mit einer Abschirmeinheit und mit einem Spulenträger bekannt. Ein Abschirmmaterial der Abschirmeinheit ist in einem aufwendigen Herstellungsverfahren ausgehend von einem granulat-förmigen oder pulver-förmigen Zustand zu mehreren dichten Masseblöcken zusammengepresst, in welchen einzelne Körner unbeweglich relativ zueinander angeordnet sind. Diese dichten Masseblöcke sind an dem Spulenträger befestigt, beispielsweise mittels Klebeverbindungen. Dabei ist die auf mehrere Masseblöcke aufgeteilte Abschirmeinheit dazu vorgesehen, zumindest einen Ort gegen ein Magnetfeld, das von einer auf dem Spulenträger angeordneten Spule erzeugt ist, abzuschirmen.

Die Druckschrift FR 2 657 486 A1 offenbart eine elektromagnetische Induktionskochvorrichtung, mit Elementen aus Material mit hoher magnetischer Permeabilität und geringer Leitfähigkeit.

Die Druckschrift EP 0 706 303 A2 offenbart eine Spule zur Induktionsheizung mit zumindest einem bandförmigen Metall zur Abschirmung des Magnetfelds.

Die Druckschrift JP H05 251167 A offenbart eine Induktionsspule mit einem Metallkörper, der an der Unterseite der Spule angeordnet ist, um ein magnetisches Feld abzuschirmen.

Die Druckschrift DE 10 2013 218714 A1 offenbart ein Kochfeld mit zumindest einem Abschirmelement.

Die Druckschrift WO 2014/170166 A1 offenbart eine Induktionskochvorrichtung mit zumindest einem Phasenwechselmaterial, welches zumindest die von der Induktionsspule abgegebene Wärme absorbiert.

Die Druckschrift EP 2 473 001 A1 offenbart eine Induktionskochvorrichtung mit Ferrit, welches unter einer Heizspule angeordnet ist.

Die Druckschrift DE 38 08 756 A1 offenbart eine Induktionskochvorrichtung mit Ferritpartikeln zu einer Abschirmung eines erzeugten Magnetfelds nach dem Oberbegriff des Anspruchs 1.

Die Aufgabe der Erfindung besteht insbesondere darin, eine gattungsgemäße Vorrichtung vorteilhaft weiterzuentwickeln. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Gargerätevorrichtung, insbesondere einer Kochfeldvorrichtung, mit zumindest einer Induktionsheizleitung, die zu einer Spule, insbesondere einer Flachspule, gewickelt ist, welche zu einer Erzeugung eines Magnetfelds vorgesehen ist, und mit zumindest einer Abschirmeinheit, die dazu vorgesehen ist, zumindest einen Ort gegen ein von der Spule erzeugtes Magnetfeld zumindest teilweise abzuschirmen.

Es wird vorgeschlagen, dass die Gargerätevorrichtung zumindest einen Behälter umfasst, der in einer Einbaulage zu einer Lagerung der zumindest einen Abschirmeinheit vorgesehen ist. Unter einer "Gargerätevorrichtung" soll insbesondere zumindest ein Teil, insbesondere eine Unterbaugruppe, eines Gargeräts, insbesondere eines Kochfelds, verstanden werden. Insbesondere kann die Gargerätevorrichtung auch das gesamte Gargerät, insbesondere das gesamte Kochfeld, umfassen. Unter einer "Induktionsheizleitung" soll insbesondere eine elektrische Leitung verstanden werden, die dazu vorgesehen ist, einen elektrischen Strom zu führen, der dazu vorgesehen ist, in einem geeigneten Gargeschirr Induktionseffekte, insbesondere Wirbelstromeffekte und/oder Ummagnetisierungseffekte, hervorzurufen. Insbesondere ist die zumindest eine Induktionsheizleitung dazu vorgesehen, in wenigstens einem Betriebszustand von hochfrequentem Wechselstrom, insbesondere mit einer Frequenz von zumindest 1 kHz, insbesondere von zumindest 3 kHz, vorteilhaft von zumindest 10 kHz und besonders vorteilhaft von zumindest 20 kHz und insbesondere von maximal 100 kHz durchflossen zu werden. Vorzugsweise ist die zumindest eine Induktionsheizleitung von einer Litzenleitung, mit vorteilhaft gegeneinander isolierten und besonders vorteilhaft miteinander verdrillten Einzeladern, gebildet. Unter einer "Abschirmeinheit" soll insbesondere eine Einheit verstanden werden, die dazu vorgesehen ist, eine Feldstärke des von der Spule erzeugten Magnetfelds an dem zumindest einen Ort zu reduzieren, insbesondere in einem Vergleich zu einer Ausgestaltung unter Vermeidung der Abschirmeinheit und/oder vorteilhaft in einem Vergleich zu einer Ausgestaltung vor einer Montage der zumindest einen Abschirmeinheit. Vorzugsweise ist die zumindest eine Abschirmeinheit, insbesondere zusätzlich zu einer Abschirmung des zumindest einen Orts gegen das Magnetfeld, dazu vorgesehen, von der Spule erzeugte Streufelder zu minimieren. Die zumindest eine Abschirmeinheit ist vorteilhaft dazu vorgesehen, in einer Einbaulage wenigstens in einer Horizontalrichtung zu der Spule benachbart angeordnete Orte gegen das von der Spule erzeugte Magnetfeld abzuschirmen, wobei der zumindest eine Ort insbesondere in der Horizontalrichtung zu der Spule benachbart angeordnet ist. Unter einer "Spule" soll insbesondere ein induktives Bauelement mit zumindest einer insbesondere bestimmten Induktivität verstanden werden. Insbesondere ist die Spule zumindest im Wesentlichen in Form einer Kreisscheibe, alternativ in Form eines Ovals oder eines Rechtecks, ausgebildet. Insbesondere weist die Spule zumindest fünf, insbesondere zumindest zehn, vorteilhaft zumindest fünfzehn, bevorzugt zumindest zwanzig Wicklungen zumindest einer Induktionsheizleitung auf. Beispielsweise könnten Wicklungen zumindest eines Spulenabschnitts in mehreren Ebenen angeordnet sein. Vorzugsweise sind Wicklungen zumindest eines Spulenabschnitts in einer Ebene angeordnet. Unter der Wendung, dass die zumindest eine Abschirmeinheit dazu vorgesehen ist, zumindest einen Ort gegen ein von einer Spule erzeugtes Magnetfeld "zumindest teilweise" abzuschirmen, soll insbesondere verstanden werden, dass die zumindest eine Abschirmeinheit dazu vorgesehen ist, eine Feldstärke des von der Spule erzeugten Magnetfelds an dem zumindest einen Ort auf einen Wert von maximal 50 %, insbesondere von maximal 30 %, vorteilhaft von maximal 10 %, besonders vorteilhaft von maximal 5 % und vorzugsweise von maximal 2 % eines abschirmeinheitlosen Werts zu reduzieren. Unter einem "Behälter" soll insbesondere ein dreidimensionaler Körper verstanden werden, vorzugsweise in Form einer Art Wanne, der insbesondere einen Behälterboden und vorteilhaft zumindest eine Seitenwand und besonders vorteilhaft zusätzlich zumindest einen Teil einer Behälterdecke aufweist. Vorzugsweise bildet der zumindest eine Behälter wenigstens einen Großteil eines geschlossenen Volumens aus, in dem die zumindest eine Abschirmeinheit in einem betriebsbereiten Zustand angeordnet ist. Vorteilhaft weist der zumindest eine Behälter ein isolierendes, vorteilhaft zumindest teilweise flexibles Material auf, das insbesondere zusätzlich wenigstens im Wesentlichen temperaturresistent ausgebildet ist. Der zumindest eine Behälter kann vorteilhaft beliebige dreidimensionale Formen annehmen. Beispielsweise könnte der zumindest eine Behälter in Form eines Kegelstupfs, eines Torus und/oder eines Pyramidenstumpfs ausgebildet sein. Alternativ oder zusätzlich sind weitere, einem Fachmann als sinnvoll erscheinende Formen denkbar. Vorzugsweise ist der zumindest eine Behälter jedoch in Form eines Zylinders und/oder eines Rings ausgebildet. Unter der Wendung, dass der zumindest eine Behälter in einer Einbaulage zu einer "Lagerung" der zumindest einen Abschirmeinheit vorgesehen ist, soll insbesondere verstanden werden, dass der zumindest eine Behälter in der Einbaulage eine Gewichtskraft der zumindest einen Abschirmeinheit trägt, wobei die zumindest eine Abschirmeinheit in der Einbaulage insbesondere oberhalb des Behälterbodens aufliegt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann eine gattungsgemäße Gargerätevorrichtung vorteilhaft weiterentwickelt werden. Insbesondere können eine langlebige Ausgestaltung und/oder eine sichere Lagerung der zumindest einen Abschirmeinheit erreicht werden kann. Darüber hinaus kann vorteilhaft die zumindest eine Abschirmeinheit gezielt an vorgegebenen Stellen angeordnet werden, wodurch eine hohe Wirkung der zumindest einen Abschirmeinheit erreicht werden kann. Durch beliebige Formen des zumindest einen Behälters kann vorteilhaft eine hohe Flexibilität erreicht werden.

Ferner wird vorgeschlagen, dass die Gargerätevorrichtung zumindest einen Spulenträger umfasst, der insbesondere in einem montierten Zustand mit dem zumindest einen Behälter verbunden ist, wobei vorzugsweise der zumindest eine Behälter insbesondere gemeinsam mit zumindest einem Spulenträger ein geschlossenes Volumen ausbildet, in dem die Abschirmeinheit angeordnet ist. Unter einem "Spulenträger" soll insbesondere eine Einheit verstanden werden, die dazu vorgesehen ist, die Induktionsheizleitung in Form und/oder Position zu halten. Insbesondere ist der zumindest eine Spulenträger von einem isolierenden, vorteilhaft zumindest teilweise flexiblen Material gebildet. Dadurch kann insbesondere eine kompakte Bauweise und/oder eine platzsparende Ausgestaltung erreicht werden.

Es sind verschiedene, einem Fachmann als sinnvoll erscheinende Möglichkeiten denkbar, den zumindest einen Behälter und den zumindest einen Spulenträger miteinander zu verbinden. Beispielsweise könnten der zumindest eine Behälter und der zumindest eine Spulenträger kraftschlüssig, insbesondere durch Klemmung, und/oder verklemmt und/oder formschlüssig, insbesondere durch Klebung, miteinander verbunden sein. Ebenfalls denkbar ist eine Rastverbindung zwischen dem zumindest einen Behälter und dem zumindest einen Spulenträger. Insbesondere könnten der zumindest eine Behälter und der zumindest eine Spulenträger einstückig ausgebildet und vorteilhaft in einem Stück geformt sein, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise sind der zumindest eine Behälter und der zumindest eine Spulenträger insbesondere in dem montierten Zustand jedoch miteinander verriegelt, wodurch insbesondere eine hohe Flexibilität erreicht werden kann. Darüber hinaus kann eine stabile und/oder langlebige Ausgestaltung erreicht werden.

Weiterhin wird vorgeschlagen, dass der zumindest eine Behälter den zumindest einen Spulenträger insbesondere in dem montierten Zustand und vorteilhaft in einer Einbaulage zumindest seitlich überragt. Insbesondere weist der zumindest eine Behälter in wenigstens einer Richtung, die insbesondere zumindest im Wesentlichen parallel zu dem Behälterboden ausgerichtet ist, eine Erstreckung auf, die größer ist als eine Erstreckung des zumindest einen Spulenträgers in der wenigstens einen Richtung. Vorteilhaft überragt der zumindest eine Behälter den zumindest einen Spulenträger bei Betrachtung in einer Querschnittsebene, die insbesondere zumindest im Wesentlichen senkrecht zu dem Behälterboden ausgerichtet ist, um eine Strecke von mindestens 1 mm, insbesondere von mindestens 2 mm sowie vorteilhaft von mindestens 3 mm und von insbesondere maximal 20 mm, vorteilhaft von maximal 15 mm sowie besonders vorteilhaft von maximal 10 mm. Dadurch kann insbesondere ein großer von dem zumindest einen Behälter definierter Innenraum erreicht werden, wodurch vorzugsweise das Magnetfeld effektiv verändert werden kann.

Ferner wird vorgeschlagen, dass der zumindest eine Behälter die zumindest eine Abschirmeinheit insbesondere in dem montierten Zustand und bei Betrachtung in zumindest einer Querschnittsebene von wenigstens drei Seiten wenigstens teilweise umgibt. Der zumindest eine Behälter umgibt die zumindest eine Abschirmeinheit insbesondere in dem montierten Zustand und bei Betrachtung in der zumindest einen Querschnittsebene vorteilhaft in zumindest drei, vorteilhaft um zumindest im Wesentlichen 90° gegeneinander versetzten Richtungen, insbesondere Blickrichtungen, wenigstens teilweise. Vorteilhaft umgibt der zumindest eine Behälter die zumindest eine Abschirmeinheit insbesondere in dem montierten Zustand wenigstens größtenteils, insbesondere mittels des Behälterbodens und vorteilhaft mittels wenigstens einer Seitenwand und besonders vorteilhaft zusätzlich mittels des zumindest einen Teils der Behälterdecke. Dadurch kann insbesondere die zumindest eine Abschirmeinheit sicher gelagert werden.

Zudem wird vorgeschlagen, dass der zumindest eine Behälter und der zumindest eine Spulenträger insbesondere in dem montierten Zustand und vorteilhaft in einer Einbaulage an einer einer Kochfeldplatte zugewandten Seite wenigstens im Wesentlichen bündig verlaufen. Unter der Wendung, dass der zumindest eine Behälter und der zumindest eine Spulenträger an einer einer Kochfeldplatte zugewandten Seite "wenigstens im Wesentlichen" bündig verlaufen, soll insbesondere verstanden werden, dass eine der Kochfeldplatte zugewandte Seite des zumindest einen Behälters, insbesondere die Behälterdecke, eine erste Ebene definiert und dass eine der Kochfeldplatte zugewandte Seite des zumindest einen Spulenträgers eine zweite Ebene definiert, wobei die erste Ebene und die zweite Ebene einen Abstand von maximal 30 %, insbesondere von maximal 20 %, vorteilhaft von maximal 10 % und besonders vorteilhaft von maximal 5 % einer Erstreckung der Seitenwand des zumindest einen Behälters aufweisen. Dadurch kann insbesondere ein geringer Abstand des zumindest einen Behälters zu der Kochfeldplatte und damit vorteilhaft eine effektive Veränderung des Magnetfelds erreicht werden.

Weiterhin umfasst die Gargerätevorrichtung zumindest ein Blockierungselement, das insbesondere in dem montierten Zustand wenigstens teilweise in einem von dem Behälter definierten Innenraum angeordnet ist und das dazu vorgesehen ist, insbesondere in dem montierten Zustand eine Anordnung der zumindest einen Abschirmeinheit in einem Teilbereich des Innenraums zu blockieren, wodurch das Magnetfeld insbesondere an beliebigen Stellen gezielt verändert werden kann.

Der zumindest eine Behälter könnte insbesondere aus Metall, wie beispielsweise Aluminium und/oder austenitischem Stahl ausgebildet sein. Ebenfalls denkbar sind weitere, einem Fachmann als sinnvoll erscheinende Materialien. Vorteilhaft weist der zumindest eine Behälter jedoch ein elektrisch isolierendes, vorteilhaft zumindest teilweise flexibles Material auf, das insbesondere zusätzlich wenigstens im Wesentlichen temperaturresistent ausgebildet ist. Vorzugsweise weist der zumindest eine Behälter zumindest einen Kunststoff auf, wodurch insbesondere eine preiswerte Ausgestaltung und/oder eine hohe Flexibilität, insbesondere bei einem geringen Gewicht, erreicht werden kann.

Zudem ist die zumindest eine Abschirmeinheit wenigstens größtenteils zumindest granulat-förmig ausgebildet ist. Unter einer "zumindest granulat-förmigen" Abschirmeinheit soll insbesondere eine Abschirmeinheit verstanden werden, die eine Vielzahl an Körnern umfasst und die insbesondere lose granulat-förmig ausgebildet ist, in einem betriebsbereiten Zustand, wobei insbesondere einzelne Körner in einem betriebsbereiten Zustand und bei Anordnung in freiem Raum zumindest weitgehend unabhängig voneinander bewegbar sind und wobei vorteilhaft die Körner eine Korngröße von maximal 10 mm, insbesondere von maximal 5 mm, vorteilhaft von maximal 3 mm aufweisen. Insbesondere rieselt ein Abschirmmaterial der sich in betriebsbereitem Zustand befindlichen zumindest einen zumindest granulat-förmigen Abschirmeinheit bei Öffnen zumindest eines Behälters, in dem das Abschirmmaterial angeordnet ist, aus dem zumindest einen Behälter heraus. Vorteilhaft können einzelne Körner frei aus einer Vielzahl an Körnern herausgegriffen und/oder hinzugefügt werden. Unter der Wendung, dass die zumindest eine Abschirmeinheit "zumindest größtenteils" zumindest granulat-förmig ausgebildet ist, soll insbesondere verstanden werden, dass die zumindest eine Abschirmeinheit zu einem Massenanteil und/oder Volumenanteil von mindestens 80 %, insbesondere von mindestens 90 % und vorteilhaft von mindestens 95 % zumindest granulat-förmig ausgebildet ist. Dadurch kann insbesondere eine vorteilhafte Gargerätevorrichtung erreicht werden, wobei vorzugsweise eine preiswerte Ausgestaltung und/oder eine hohe Effizienz erreicht werden kann. Vorteilhaft kann ein Großteil eines aufwendigen Herstellungsverfahrens, das zu einer Herstellung eines Masseblocks benötigt ist, vermieden werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Gargerät mit einer erfindungsgemäßen Gargerätevorrichtung in einer schematischen Draufsicht,
- Fig. 2: einen Behälter, eine Abschirmeinheit, einen Spulenträger und eine Induktionsheizleitung der Gargerätevorrichtung aus Fig. 1 in einer schematischen Schnittdarstellung und
- Fig. 3: einen Behälter, eine Abschirmeinheit, einen Spulenträger und eine Induktionsheizleitung einer alternativen Gargerätevorrichtung in einer schematischen Schnittdarstellung.

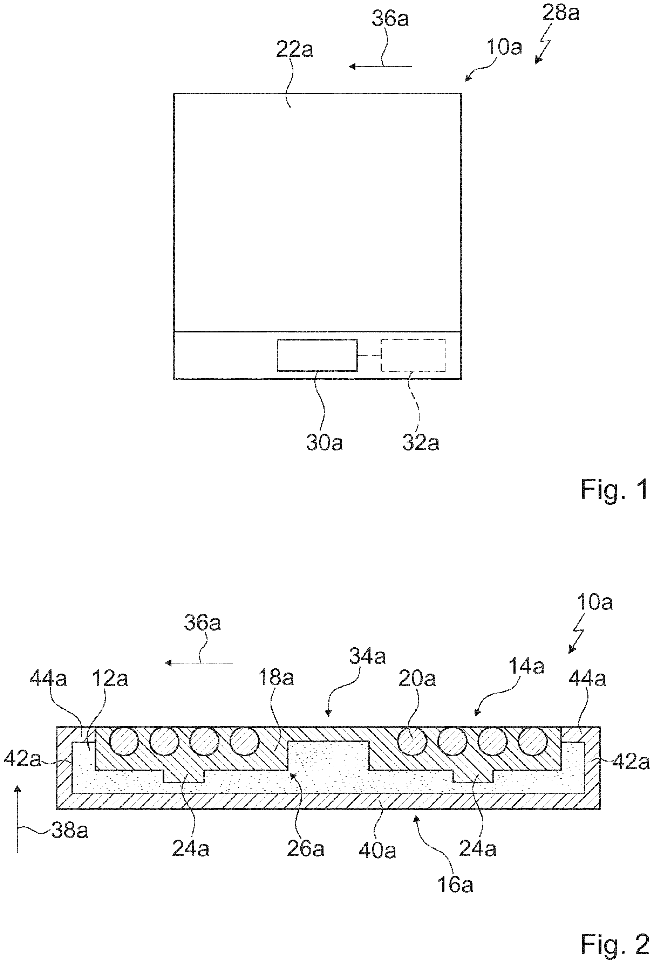

Fig. 1 zeigt ein Gargerät 28a, das als Kochfeld, insbesondere als Induktionskochfeld, ausgebildet ist, mit einer Gargerätevorrichtung 10a, die als Kochfeldvorrichtung, insbesondere als Induktionskochfeldvorrichtung, ausgebildet ist. Alternativ zu einer Ausbildung als Kochfeld könnte das Gargerät als induktiv beheizbarer Backofen ausgebildet sein. Ebenfalls denkbar sind weitere, einem Fachmann als sinnvoll erscheinende Gargeräte.

Das Gargerät 28a umfasst eine Kochfeldplatte 22a, die zu einem Aufstellen von Gargeschirren vorgesehen ist. Die Kochfeldplatte 22a bildet eine Kochfläche aus. Das Gargerät 28a umfasst eine Bedieneinheit 30a zu einer Eingabe und/oder Auswahl von Betriebsparametern, beispielsweise einer Heizleistung und/oder einer Heizleistungsdichte und/oder einer Heizzone. Die Bedieneinheit 30a ist zu einer Ausgabe eines Werts eines Betriebsparameters an einen Bediener vorgesehen. Das Gargerät 28a umfasst eine Steuereinheit 32a, die in Abhängigkeit von mittels der Bedieneinheit 30a eingegebener Betriebsparameter Aktionen ausführt und/oder Einstellungen verändert.

Die Gargerätevorrichtung 10a umfasst mehrere Induktionsheizleitungen 20a, die jeweils zu einer Spule 14a gewickelt sind (vgl. Fig. 2). Für jede der Induktionsheizleitungen 20a umfasst die Gargerätevorrichtung 10a einen Spulenträger 18a, auf dem eine der Induktionsheizleitungen 20a zu der Spule 14a gewickelt ist. Im vorliegenden Ausführungsbeispiel sind die Spulenträger 18a wenigstens teilweise aus Kunststoff gebildet. Alternativ und/oder zusätzlich könnten die Spulenträger wenigstens teilweise aus Keramik gebildet sein. Die Induktionsheizleitungen 20a sind aus Kupfer, alternativ oder zusätzlich aus Aluminium, ausgebildet. Alternativ sind weitere, einem Fachmann als sinnvoll erscheinende Materialien denkbar. Die Induktionsheizleitungen 20a sind jeweils um ein Spulenzentrum 34a zu einer Spule 14a gewickelt, wobei das Spulenzentrum 34a mit einem Mittelpunkt und/oder einem Schwerpunkt des Spulenträgers 18a zusammenfällt. Zusätzlich hierzu stellt jedes Spulenzentrum 34a einen Mittelpunkt und/oder einen Schwerpunkt der Spule 14a dar.

Jede Spule 14a bildet ein Heizelement aus und ist zu einer Erzeugung eines Magnetfelds vorgesehen. Mittels des Magnetfelds erhitzt jede Spule 14a in einem Betriebszustand aufgestelltes Gargeschirr. Die Spulen 14a sind unterhalb der Kochfeldplatte 22a angeordnet. Beispielsweise könnten die Spulen getrennt voneinander angeordnete Heizzonen ausbilden, wobei jede der Spulen separat zu einer Erhitzung von aufgestelltem Gargeschirr vorgesehen sein könnte. Ebenfalls denkbar ist eine Anordnung der Spulen in Form einer Kochfeld-Matrix, wobei die Spulen in Zeilen und Spalten angeordnet sein könnten. Hierbei könnten je nach Größe von aufgestelltem Gargeschirr mehrere Spulen gemeinsam eine einzige Heizzone zu einer Erhitzung von aufgestelltem Gargeschirr ausbilden.

Die Gargerätevorrichtung 10a umfasst für jede Spule 14a eine Abschirmeinheit 12a, die mehrere Orte gegen das von einer Spule 14a erzeugte Magnetfeld teilweise abschirmt. Hierbei schirmt jede Abschirmeinheit 12a in einer Einbaulage Orte ab, die in Horizontalrichtungen 36a, die im Wesentlichen parallel zu der Kochfeldplatte 22a ausgerichtet sind, zu der Spule 14a benachbart angeordnet sind. Zusätzlich zu einer Abschirmung der seitlich zu einer jeweiligen Spule 14a benachbarten Orte bündelt jede Abschirmeinheit 12a das von der Spule 14a erzeugte Magnetfeld an weiteren Orten. Die weiteren Orte sind in einer Vertikalrichtung 38a, die im Wesentlichen senkrecht zu der Kochfeldplatte 22a ausgerichtet ist, zu der jeweiligen Spule 14a benachbart. In einem Bereich von aufgestelltem Gargeschirr bündeln die Abschirmeinheiten 12a die von den Spulen 14a erzeugten Magnetfelder. Die Abschirmeinheiten 12a sind zu einer Verstärkung der von den Spulen 14a erzeugten Magnetfelder an den weiteren Orten vorgesehen.

Die Abschirmeinheiten 12a sind größtenteils zumindest granulat-förmig ausgebildet. Im vorliegenden Ausführungsbeispiel weisen die Abschirmeinheiten 12a jeweils ein Pulver auf. In einer alternativen Ausgestaltung ist denkbar, dass die Abschirmeinheiten jeweils ein Granulat aufweisen. Ebenfalls denkbar sind Mischungen, bei denen die Abschirmeinheiten sowohl Pulver als auch Granulat aufweisen. Darüber hinaus könnten die Abschirmeinheiten Pulver und/oder Granulat aus verschiedenen Materialien aufweisen. Beispielsweise könnten hierbei Metalle verwendet werden, welche eine hohe Permeabilität aufweisen, wie beispielsweise Eisen. Im vorliegenden Ausführungsbeispiel sind die Abschirmeinheiten 12a zumindest teilweise aus Ferriten ausgebildet. Hierbei sind die Abschirmeinheiten 12a aus Weichferriten ausgebildet.

Die Abschirmeinheiten 12a weisen eine Permeabilität in einem Bereich von im Wesentlichen 1000 auf. Dadurch können die von den Spulen 14a erzeugten Magnetfelder in für den Gebrauch ausreichender Weise verändert werden, wodurch ein optimales Preis-Leistungsverhältnis erreicht werden kann. Die Abschirmeinheiten 12a weisen eine Dichte von maximal 5000 kg/m³ auf. Vorteilhaft weisen die Abschirmeinheiten 12a eine Dichte in einem Bereich von 3000 kg/m³ bis 4500 kg/m³ auf.

Die Gargerätevorrichtung 10a weist für jede Spule 14a einen Behälter 16a auf, der in der Einbaulage zu einer Lagerung der jeweiligen Abschirmeinheit 12a vorgesehen ist (vgl. Fig. 2). Die Behälter 16a weisen jeweils einen Kunststoff auf. Alternativ und/oder zusätzlich könnten die Behälter 16a jeweils eine Keramik aufweisen. Ebenfalls denkbar ist, dass die Behälter mehrere Kunststoffe und/oder mehrere Keramiken aufweisen. Darüber hinaus sind Mischungen denkbar, in welchen die Behälter sowohl einen oder mehrere Kunststoffe als auch eine oder mehrere Keramiken aufweisen.

Die Behälter 16a weisen jeweils einen Behälterboden 40a und eine Seitenwand 42a auf, die mit dem Behälterboden 40a zusammen einen wannenartigen Körper ausbildet. Jeder Behälterboden 40a ist einstückig mit der jeweiligen Seitenwand 42a ausgebildet. Alternativ ist eine mehrteilige Ausgestaltung der Behälter denkbar, wobei Seitenwände und Behälterböden fest miteinander verbunden sind, wie beispielsweise durch eine Klebeverbindung. Hierbei könnten die Behälterböden aus insbesondere isolierendem, vorteilhaft unmagnetischem Metall ausgebildet sein. Ebenfalls denkbar ist, dass die Behälterböden aus Aluminium und/oder austenitischem Stahl ausgebildet sind. Dabei ist denkbar, dass die Behälter dazu vorgesehen sind, elektrische Bauteile, insbesondere wenigstens eine Kochfeldelektronik und/oder die Steuereinheit, gegenüber von den Spulen verursachter elektromagnetischer Strahlung, insbesondere Wärmestrahlung und/oder Magnetfeldern, abzuschirmen.

Zusätzlich zu dem Behälterboden 40a und der Seitenwand 42a weist jeder Behälter 16a eine Behälterdecke 44a auf. Jede Behälterdecke 44a bildet einen Teil einer in der Einbaulage der Kochfeldplatte 22a zugewandten Begrenzung des Behälters 16a aus. Jeder Behälter 16a definiert einen Innenraum 26a, in welchem die Abschirmeinheit 12a in einem montierten Zustand angeordnet ist. Die Behälter 16a und die Spulenträger 18a sind in dem montierten Zustand miteinander verbunden. Hierbei sind die Behälter 16a und die Spulenträger 18a in dem montierten Zustand miteinander verriegelt. Die Spulenträger 18a sind in dem montierten Zustand mit den Behälterdecken 44a der Behälter 16a verriegelt. Die Behälterdecken 44a und die Spulenträger 18a bilden in dem montierten Zustand gemeinsam eine der Kochfeldplatte 22a zugewandte Begrenzung des Innenraums 26a aus. Die Behälter 16a erstrecken sich in dem montierten Zustand über einen Bereich der Spulenzentren 34a der Spulen 14a hinweg.

In dem montierten Zustand überragt jeder Behälter 16a den Spulenträger 18a seitlich. Hierbei überragt jeder Behälter 16a den Spulenträger 18a in dem montierten Zustand in jeder Horizontalrichtung 36a um im Wesentlichen 5 mm. Jeder Behälter 16a erstreckt sich in dem montierten Zustand über im Wesentlichen eine gesamte Fläche der Spule 14a. Jeder Behälter 16a umgibt die Abschirmeinheit 12a in dem montierten Zustand bei Betrachtung in einer Querschnittsebene von drei Seiten teilweise (vgl. Fig. 2). In dem montierten Zustand ragt jeder Spulenträger 18a teilweise in den von dem Behälter 16a definierten Innenraum 26a hinein. An einer der Kochfeldplatte 22a zugewandten Seite verlaufen die Behälter 16a und die Spulenträger 18a in dem montierten Zustand im Wesentlichen bündig.

In dem montierten Zustand sind die Abschirmeinheiten 12a in dem von den Behältern 16a definierten Innenräumen 26a angeordnet. Hierbei füllen die Abschirmeinheiten 12a die Innenräume 26a im Wesentlichen aus. Somit sind die Abschirmeinheiten 12a unter anderem seitlich neben den Spulenträgern 18a angeordnet, wodurch eine effektive Abschirmung der Orte erreicht werden kann. Um eine gleichmäßige Erhitzung von aufgestelltem Gargeschirr zu erreichen, weist die Gargerätevorrichtung 10a für jede Spule 14a ein Blockierungselement 24a auf, das teilweise in dem von dem Behälter 16a definierten Innenraum 26a angeordnet ist. Die Blockierungselemente 24a sind in dem montierten Zustand in Teilbereichen des Innenraums 26a angeordnet, die im Wesentlichen mittig zwischen einer inneren Wicklung und einer äußeren Wicklung der Spulen 14a angeordnet sind. Hierbei sind die Blockierungselemente 24a in dem montierten Zustand im Wesentlichen auf halber Strecke zwischen den Spulenzentren 34a und äußeren Begrenzungen der Spulen 14a angeordnet. Die Blockierungselemente 24a blockieren in dem montierten Zustand eine Anordnung der Abschirmeinheiten 12a in den Teilbereichen der Innenräume 26a. Im vorliegenden Ausführungsbeispiel sind die Blockierungselemente 24a einstückig mit den Spulenträgern 18a ausgebildet. Alternativ könnten die Blockierungselemente separat zu den Spulenträgern ausgebildet sein, wobei die Blockierungselemente an den Spulenträgern angeordnet sind, beispielsweise durch Klebung, Rastung, Klemmung und/oder Verriegelung.

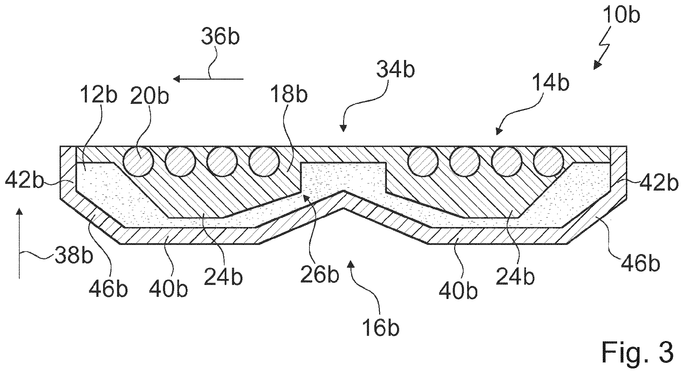

Fig. 3 zeigt einen Behälter 16b und einen Spulenträger 18b einer alternativen Gargerätevorrichtung 10b. Der Behälter 16b, der in der Einbaulage zu einer Lagerung einer Abschirmeinheit 12b vorgesehen ist, weist einen Behälterboden 40b und eine Seitenwand 42b auf. Der Behälterboden 40b ist in dem montierten Zustand im Wesentlichen parallel zu einer Kochfeldplatte 22b ausgerichtet. Die Seitenwand 42b ist in dem montierten Zustand im Wesentlichen senkrecht zu der Kochfeldplatte 22b ausgerichtet. Der Behälterboden 40b und die Seitenwand 42b sind miteinander über Verbindungselemente 46b des Behälters 16b verbunden. Die Verbindungselemente 46b sind in dem montieren Zustand schräg relativ zu der Kochfeldplatte 22b ausgerichtet.

Der Behälter 16b weist bei Betrachtung in einer Querschnittsebene eine im Wesentlichen W-förmige Gestalt auf. Der Behälterboden 40b weist in einem Bereich eines

Spulenzentrums 34b eine in Richtung des Spulenträger 18b weisende Einbuchtung auf. An einer der Kochfeldplatte 22b zugewandten Seite verlaufen der Behälter 16b und der Spulenträger 18b im Wesentlichen bündig, wobei der Spulenträger 18b in dem montierten Zustand im Wesentlichen eine gesamte der Kochfeldplatte 22b zugewandte Begrenzung eines von dem Behälter 16b definierten Innenraums 26b ausbildet.

### Bezugszeichen

- 10: Gargerätevorrichtung
- 12: Abschirmeinheit
- 14: Spule
- 16: Behälter
- 18: Spulenträger
- 20: Induktionsheizleitung
- 22: Kochfeldplatte
- 24: Blockierungselement
- 26: Innenraum
- 28: Gargerät
- 30: Bedieneinheit
- 32: Steuereinheit
- 34: Spulenzentrum
- 36: Horizontalrichtung
- 38: Vertikalrichtung
- 40: Behälterboden
- 42: Seitenwand
- 44: Behälterdecke
- 46: Verbindungselement

## Patentansprüche

1. Gargerätevorrichtung mit zumindest einer Induktionsheizleitung (20a-b), die zu einer Spule (14a-b) gewickelt ist, welche zu einer Erzeugung eines Magnetfelds vorgesehen ist, mit zumindest einer Abschirmeinheit (12a-b), die dazu vorgesehen ist, zumindest einen Ort gegen ein von der Spule (14a-b) erzeugtes Magnetfeld zumindest teilweise abzuschirmen, und die wenigstes größtenteils zumindest granulat-förmig ausgebildet ist und eine Vielzahl an Körnern umfasst, wobei einzelne Körner in einem betriebsbereiten Zustand und bei Anordnung in freiem Raum zumindest weitgehend unabhängig voneinander bewegbar sind, mit zumindest einem Behälter (16a-b), der in einer Einbaulage zu einer Lagerung der zumindest einen Abschirmeinheit (12a-b) vorgesehen ist, **gekennzeichnet durch** zumindest ein Blockierungselement (24a-b), das wenigstens teilweise in einem von dem Behälter (16a-b) definierten Innenraum angeordnet ist und das dazu vorgesehen ist, eine Anordnung der zumindest einen Abschirmeinheit (12a-b) in einem Teilbereich des Innenraums (26a-b) zu blockieren.

2. Gargerätevorrichtung nach Anspruch 1, **gekennzeichnet durch** zumindest einen Spulenträger (18a-b), der mit dem zumindest einen Behälter (16a-b) verbunden ist.

3. Gargerätevorrichtung nach Anspruch 2, **dadurch gekennzeichnet, dass** der zumindest eine Behälter (16a-b) und der zumindest eine Spulenträger (18a-b) miteinander verriegelt sind.

4. Gargerätevorrichtung zumindest nach Anspruch 2, **dadurch gekennzeichnet, dass** der zumindest eine Behälter (16a-b) den zumindest einen Spulenträger (18a-b) zumindest seitlich überragt.

5. Gargerätevorrichtung nach einem der vorhergehenden Ansprüche, **dadurch gekennzeichnet, dass** der zumindest eine Behälter (16a-b) die zumindest eine Abschirmeinheit (12a-b) bei Betrachtung in zumindest einer Querschnittsebene von wenigstens drei Seiten wenigstens teilweise umgibt.

6. Gargerätevorrichtung nach den Ansprüchen 2 und 5, **dadurch gekennzeichnet, dass** der zumindest eine Behälter (16a-b) und der zumindest eine Spulenträger (18a-b) an einer einer Kochfeldplatte (22a-b) zugewandten Seite wenigstens im Wesentlichen bündig verlaufen.

7. Gargerätevorrichtung nach einem der vorhergehenden Ansprüche, **dadurch gekennzeichnet, dass** der zumindest eine Behälter (16a-b) zumindest einen Kunststoff aufweist.

8. Gargerät, insbesondere Kochfeld, mit zumindest einer Gargerätevorrichtung (10a-b) nach einem der vorhergehenden Ansprüche.

## Claims

1. Cooking appliance apparatus with at least one induction heating line (20a-b), which is wound to form a coil (14a-b), which is provided to generate a magnetic field, with at least one shielding unit (12a-b), which is provided to at least partially shield at least one location from a magnetic field generated by the coil (14a-b), and which is at least for the most part embodied in at least a granulate form and comprises a large number of grains, wherein individual grains can be at least largely moved independently from one another in an operational state and when arranged in an open area, with at least one container (16a-b), which in an installed position is provided for storing the at least one shielding unit (12a-b), **characterised by** at least one blocking element (24a-b), which is at least partially arranged in an inner space defined by the container (16a-b) and which is provided to block an arrangement of the at least one shielding unit (12a-b) in a subregion of the inner space (26a-b).

2. Cooking appliance apparatus according to claim 1, **characterised by** at least one coil carrier (18a-b), which is connected to the at least one container (16a-b).

3. Cooking appliance apparatus according to claim 2, **characterised in that** the at least one container (16a-b) and the at least one coil carrier (18a-b) are interlocked.

4. Cooking appliance apparatus at least according to claim 2, **characterised in that** the at least one container (16a-b) protrudes above the at least one coil carrier (18a-b), at least to the side.

5. Cooking appliance apparatus according to one of the preceding claims, **characterised in that** the at least one container (16a-b) at least partially surrounds the at least one shielding unit (12a-b) from at least three sides when viewed in at least one cross-sectional plane.

6. Cooking appliance apparatus according to claims 2 and 5, **characterised in that** the at least one container (16a-b) and the at least one coil carrier (18a-b) run at least substantially flush against a side facing towards a hob plate (22a-b).

7. Cooking appliance apparatus according to one of the preceding claims, **characterised in that** the at least one container (16a-b) has at least one plastic.

8. Cooking appliance, in particular hob, with at least one cooking appliance apparatus (10a-b) according to one of the preceding claims.

## Revendications

1. Dispositif d'appareil de cuisson comprenant au moins un fil de chauffage à induction (20a-b) qui est enroulé sous la forme d'une bobine (14a-b) configurée pour produire un champ magnétique, au moins un bloc de blindage (12a-b) qui est adapté pour protéger au moins en partie au moins un emplacement contre un champ magnétique produit par la bobine (14a-b) et qui est construit au moins en grande partie au moins en forme de granulés et comprend une multitude de grains,
dans lequel des grains individuels sont mobiles au moins dans une large mesure indépendamment l'un de l'autre à l'état fonctionnel et dans un agencement dans un espace libre, et
au moins un boîtier (16a-b) qui est adapté, dans une position de montage, pour loger le au moins un bloc de blindage (12a-b),
**caractérisé par** au moins un élément de blocage (24a-b), qui est disposé au moins en partie dans un espace intérieur défini par le boîtier (16a-b) et qui est configuré pour bloquer un agencement du au moins un bloc de blindage (12a-b) dans une région partielle de l'espace intérieur (26a-b).

2. Dispositif d'appareil de cuisson selon la revendication 1, **caractérisé par** au moins un porte-bobine (18a-b) qui est raccordé à au moins un boîtier (16a-b).

3. Dispositif d'appareil de cuisson selon la revendication 2, **caractérisé en ce que** le au moins un boîtier (16a-b) et le au moins un porte-bobine (18a-b) sont verrouillés ensemble.

4. Dispositif d'appareil de cuisson selon la revendication 2, **caractérisé en ce que** le au moins un boîtier (16a-b) dépasse au moins latéralement du au moins un porte-bobine (18a-b).

5. Dispositif d'appareil de cuisson selon l'une des revendications précédentes, **caractérisé en ce que** le au moins un boîtier (16a-b) entoure au moins en partie le au moins un bloc de blindage (12a-b) vu dans au moins un plan transversal d'au moins trois côtés.

6. Dispositif d'appareil de cuisson selon les revendications 2 et 5, **caractérisé en ce que** le au moins un boîtier (16a-b) et le au moins un porte-bobine (18a-b) s'étendent au moins essentiellement en affleurement d'un côté tourné vers une plaque de cuisson (22a-b).

7. Dispositif d'appareil de cuisson selon l'une des revendications précédentes, **caractérisé en ce que** le au moins un boîtier (16a-b) comprend au moins une matière plastique.

8. Appareil de cuisson, notamment table de cuisson, comprenant au moins un dispositif d'appareil de cuisson (10a-b) selon l'une des revendications précédentes.
